# EUROPÄISCHE PATENTSCHRIFT

(11) **EP 0 911 625 B1**
(45) Veröffentlichungstag und Bekanntmachung des Hinweises auf die Patenterteilung: **08.06.2005**
(21) Anmeldenummer: 98117028.5
(22) Anmeldetag: 09.09.1998
(51) Int. Cl.: G01N 21/35, G01N 30/74

(54) **Vorrichtung und Verfahren für Probenahme und IR-spektroskopische Analyse von hochreinen, hygroskopischen Flüssigkeiten**
Apparatus and method for sampling and IR spectroscopic analysis of high purity hygroscopic fluids
Dispositif et procédé de prise d'échantillon et pour l'analyse par spectroscopie infrarouge de fluides hygroscopiques de haute pureté

(30) Priorität: 23.10.1997 DE 19746862
(43) Veröffentlichungstag der Anmeldung: 28.04.1999
(73) Patentinhaber: Degussa AG, 40474 Düsseldorf (DE)
(72) Erfinder: Krieger, Klaus-Dieter, Dr., D-79618 Rheinfelden (DE); Zehe, Lothar, D-79618 Rheinfelden (DE); Rauleder, Hartwig, Dr., D-79618 Rheinfelden (DE)

(56) Entgegenhaltungen:
- EP-A- 0 414 446
- WO-A-97/14029
- DE-A- 19 631 689
- US-A- 3 932 040
- US-A- 4 038 055
- US-A- 4 587 835
- US-A- 4 692 621
- US-A- 4 822 166

## Beschreibung

Die vorliegende Erfindung betrifft eine Vorrichtung, deren Verwendung und das Verfahren für die Probenahme und die quantitative, IR-spektroskopische Bestimmung von Verunreinigungen in hygroskopischen Flüssigkeiten mit einer Reinheit von mehr als 99,95 Gew.-%.

Hochreine Produkte, wie z. B. Siliciumtetrachlorid, werden heute u. a. bei der Herstellung von Lichtleitfasern verwendet.

Im Rahmen der Qualitätskontrolle hochreiner Flüssigkeiten ist man bestrebt, bei der Anwendung analytischer Verfahren dem Ist-Zustand hinsichtlich Reinheit des Produkts gerecht zu werden. Insbesondere bei der Probenahme können Verunreinigungen zusätzlich eingeschleppt werden, beispielsweise Feuchtigkeit, die darüber hinaus zu Folgereaktionen führen können.

EP0414446 offenbart eine Vorrichtung für Probenahme und quantitative IR-spektroskopische Bestimmung mit einer Gasleitungsanordnung umfassend u.a zwei Dreiwegehähne, die über Leitungen mit einer Meßzelle, einer Pumpe, Anschlußstellen und miteinander verbunden sind. Die Meßzelle umfaßt eine längliche optische Meßkammer, einen Einlaß und einen Auslaß, wobei Infrarot-Absorptionsmessungen mit einem Strahl entlang der Kammerachse durchgeführt werden. Weiterhin weist die Messzelle Flanschansätze auf, an denen die Gehäuse für die IR-Lichtquelle bzw. den Detektor durch Schrauben gasdicht mechanisch befestigt sind.

US 4 822 166 sowie DE 196 31 689 A1 offenbaren Ausführungen von Küvetten bzw. Probezellen für IR-spektroskopische Analysen.

Es ist bekannt, daß man Verunreinigungen im Siliciumtetrachlorid üblicherweise IR-spektroskopisch quantitativ erfassen kann, vgl. Anal. Chem. 1987, 59, 1089-1093, und Anal. Chem. 1981, 53, 1967-1968.

Es ist ferner bekannt, daß man teflonbeschichtete Küvetten oder Küvetten aus rostfreiem Stahl unter Verwendung von AgCl-Fenstern bei der Probenahme und der Analyse in Laboratorien einsetzt. Die Praxis zeigt, daß bei Verwendung der bekannten Verfahren und Küvetten im großtechnischen Maßstab dennoch ungewollte Verunreinigungen vor der eigentlichen Messung eingeschleppt werden können.

Der vorliegenden Erfindung lag daher die Aufgabe zugrunde, eine Vorrichtung sowie eine praktikable Möglichkeit zur Handhabung der Vorrichtung für den großtechnischen Maßstab bereitzustellen.

Die gestellte Aufgabe wird erfindungsgemäß entsprechend den Angaben der Patentansprüche gelöst.

Überraschenderweise wurde gefunden, daß bei Verwendung einer Vorrichtung, vgl. Abbildung, die aus einem Edelstahlrohr (1) mit geradem Durchgang, an dessen beiden Enden sich jeweils ein Flanschansatz (2) befindet, aus zwei zueinander parallel und zur Achse des Edelstahlrohres senkrecht orientierten Calciumfluoridscheiben (3), die durch jeweils einen ringförmigen Flanschaufsatz (2a) gehaltert werden, wobei die jeweiligen Flanschteile (2, 2a) miteinander mechanisch befestigt sind und jeweils zwischen den Flanschteilen (2, 2a) sowie der Calciumfluoridscheibe (3) mindestens eine Dichtung (4) vorgesehen ist, und aus zwei Dreiwegehähnen (5, 6), die über eine Edelstahlleitung (9) miteinander, Hahn (5) über die Edelstahlleitung (8) und Hahn (6) über die Edelstahlleitung (7) mit dem Edelstahlrohr (1) und Hahn (5) mit der Anschlußstelle (10) und Hahn (6) mit einer Anschlußstelle (13) verbunden sind, besteht, diese in hervorragender Weise für eine zuverlässige Probenahme und eine ergebnissichere, quantitative, IR-spektroskopische Bestimmung von Verunreinigungen in hygroskopischen Flüssigkeiten mit einer Reinheit von mehr als 99,95 Gew.-%, insbesondere für hochreines Siliciumtetrachlorid, geeignet ist.

Gegenstand der vorliegenden Erfindung ist daher eine Vorrichtung für Probenahme und quantitative, IR-spektroskopische Bestimmung von Verunreinigungen in hygroskopischen Flüssigkeiten mit einer Reinheit von mehr als 99,95 Gew.-%, die dadurch gekennzeichnet ist, daß diese aus einem Edelstahlrohr (1) mit geradem Durchgang, an dessen beiden Enden sich jeweils ein Flanschansatz (2) befindet, aus zwei zueinander parallel und zur Achse des Edelstahlrohres senkrecht orientierten Calciumfluoridscheiben (3), die durch jeweils einen ringförmigen Flanschaufsatz (2a) gehaltert werden, wobei die jeweiligen Flanschteile (2, 2a) miteinander mechanisch befestigt sind und jeweils zwischen den Flanschteilen (2, 2a) sowie der Calciumfluoridscheibe (3) mindestens eine Dichtung (4) vorgesehen ist, und aus zwei Dreiwegehähnen (5, 6), die über eine Edelstahlleitung (9) miteinander, Hahn (5) über die Edelstahlleitung (8) und Hahn (6) über die Edelstahlleitung (7) mit dem Edelstahlrohr (1) und Hahn (5) mit der Anschlußstelle (10) und Hahn (6) mit einer Anschlußstelle (13) verbunden sind, besteht.

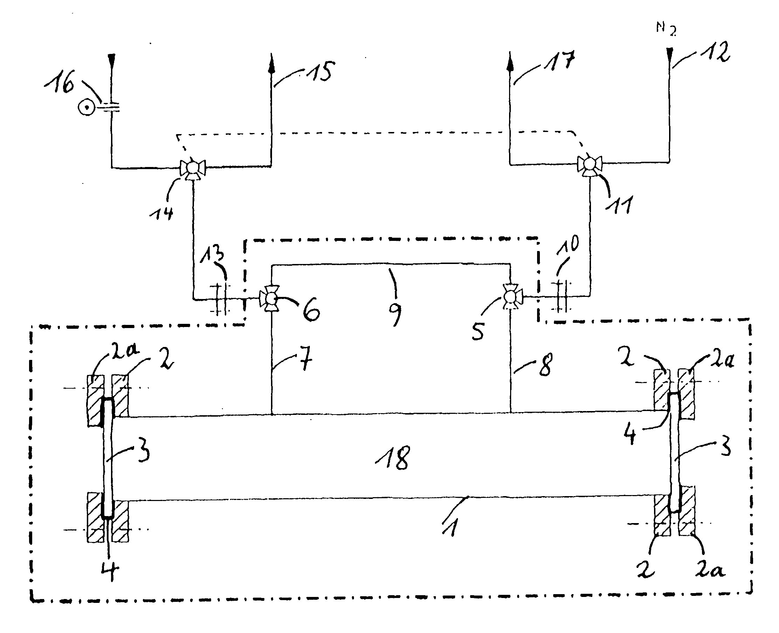

Die Abbildung zeigt das Schema einer bevorzugten erfindungsgemäßen Vorrichtung, wobei diese über die Anschlußstellen (10, 13) im wesentlichen an eine Versorgung mit trockenem Stickstoff (12) und ein Anlagenteil (16), aus dem die zu analysierende hochreine Flüssigkeit entnommen wird, angeschlossen ist.

Vorzugsweise weist das Edelstahlrohr (1) der erfindungsgemäßen Vorrichtung einen Innendurchmesser von 1 bis 3 cm und eine Innenlänge von 5 bis 20 cm bei einem Küvettenvolumen (18) von 5 bis 140 cm³, besonders vorzugsweise von 10 bis 100 cm³, auf. Die hier verwendeten Edelstähle sind geeigneterweise korrosionsbeständig, beispielsweise VA-Stähle.

Die erfindungsgemäße Vorrichtung verfügt ferner über Calciumfluoridscheiben (3), wobei eine solche vorzugsweise eine Dicke von 2 bis 10 mm und einen Durchmesser von 15 bis 50 mm aufweist.

Geeigneterweise verwendet man für die erfindungsgemäße Vorrichtung Dichtungen (4), die aus einem fluorierten Polymer bestehen, beispielsweise Viton-Dichtungen, Kalrez-Dichtungen.

Ferner ist Gegenstand der vorliegenden Erfindung die Verwendung der erfindungsgemäßen Vorrichtung für die Probenahme und die quantitative, IR-spektroskopische Bestimmung von Verunreinigungen in hygroskopischen Flüssigkeiten, vorzugsweise hochreines Siliciumtetrachlorid, mit einer Reinheit von mehr als 99,95 Gew.-%.

Im allgemeinen führt man erfindungsgemäß die Probenahme und die quantitative, IR-spektroskopische Bestimmung von Verunreinigungen in hochreinen Flüssigkeiten derart durch, vgl. Abbildung, daß man
- im ersten Schritt eine erfindungsgemäße Vorrichtung mit hochreiner Flüssigkeit, vorzugsweise mit hochreinem Siliciumtetrachlorid, füllt und die Hähne (5, 6) in Richtung der Leitungen (7, 8) schließt, wobei zwischen dem ersten und zweiten Schritt geeigneterweise mindestens eine Zeit von 1 Stunde, vorzugsweise weniger als 24 Stunden, vergeht,
- im zweiten Schritt über Hahn (11), Anschlußstelle (10), Leitung (9), Anschlußstelle (13), Hahn (14) und Auslaß (15) trockenen Stickstoff (12) führt, wobei die Stickstoffspülung vorzugsweise über einen Zeitraum von 0,1 bis 12 Stunden durchgeführt wird,
- im dritten Schritt nach Umstellen der Hähne (11, 14) aus dem Anlagenteil (16) hochreine Flüssigkeit, vorzugsweise hochreines Siliciumtetrachlorid, über Leitung (9), Hahn (11) und Auslaß (17) leitet,
- im vierten Schritt nach Umstellen der Hähne (6, 5) den Küvettenraum (18) mit hochreiner Flüssigkeit über die Hähne (14, 6) und die Leitungen (7, 8) in Richtung Auslaß (17) spült, wobei geeigneterweise mindestens ein 5facher Produktwechsel, bezogen auf das Volumen der Küvette, sicherzustellen ist, bevorzugt führt man einen 10- bis 30fachen Produktwechsel durch, und
- im fünften Schritt nach Schließen der Hähne (5, 6) in Richtung der Leitungen (7, 8) die IR-spektroskopische Messung in an sich bekannter Weise durchführt.

Das erfindungsgemäße Verfahren kann in vorteilhafter Weise an großtechnischen Anlagen vor Ort durchgeführt werden. Man kann aber auch nach Durchführung des vierten Schritts Hähne (5, 6) in Richtung der Leitungen (7, 8) schließen, Hähne (11, 14) umstellen, über Leitung (9) trockenen Stickstoff (12) in Richtung Auslaß (15) fahren, die Anschlußstellen (13, 10) trennen und nachfolgend die IR-spektroskopische Messung in an sich bekannter Weise durchführen.

Gegenstand der vorliegenden Erfindung ist daher auch ein Verfahren für die Probenahme und die quantitative, IR-spektroskopische Bestimmung von Verunreinigungen in hygroskopischen Flüssigkeiten mit einer Reinheit von mehr als 99,95 Gew.-%, das dadurch gekennzeichnet ist, daß man
- im ersten Schritt eine erfindungsgemäße Vorrichtung mit hochreiner Flüssigkeit füllt und die Hähne (5, 6) in Richtung der Leitungen (7, 8) schließt,
- im zweiten Schritt über Hahn (11), Anschlußstelle (10), Leitung (9), Anschlußstelle (13), Hahn (14) und Auslaß (15) trockenen Stickstoff (12) führt,
- im dritten Schritt nach Umstellen der Hähne (11, 14) aus dem Anlagenteil (16) hochreine Flüssigkeit über Leitung (9), Hahn (11) und Auslaß (17) leitet,
- im vierten Schritt nach Umstellen der Hähne (6, 5) den Küvettenraum (18) mit hochreiner Flüssigkeit über die Hähne (14, 6) und die Leitungen (7, 8) in Richtung Auslaß (17) spült und
- im fünften Schritt nach Schließen der Hähne (5, 6) in Richtung der Leitungen (7, 8) die IR-spektroskopische Messung in an sich bekannter Weise durchführt.

Mit Hilfe der erfindungsgemäßen Vorrichtung und unter Anwendung des erfindungsgemäßen Verfahrens kann nunmehr auch in großtechnischen Anlagen eine zuverlässige Qualitätssicherung für hochreine Flüssigkeiten, insbesondere für Siliciumtetrachlorid, durchgeführt werden.

## Patentansprüche

1. Vorrichtung für Probenahme und quantitative, IR-spektroskopische Bestimmung von Verunreinigungen in hygroskopischen Flüssigkeiten mit einer Reinheit von mehr als 99,95 Gew.-%,
**dadurch gekennzeichnet,**
**daß** diese aus einem Edelstahlrohr (1) mit geradem Durchgang, an dessen beiden Enden sich jeweils ein Flanschansatz (2) befindet, aus zwei zueinander parallel und zur Achse des Edelstahlrohres senkrecht orientierten Calciumfluoridscheiben (3), die durch jeweils einen ringförmigen Flanschaufsatz (2a) gehaltert werden, wobei die jeweiligen Flanschteile (2, 2a) miteinander mechanisch befestigt sind und jeweils zwischen den Flanschteilen (2, 2a) sowie der Calciumfluoridscheibe (3) mindestens eine Dichtung (4) vorgesehen ist, und aus zwei Dreiwegehähnen (5, 6), die über eine Edelstahlleitung (9) miteinander, Hahn (5) über die Edelstahlleitung (8) und Hahn (6) über die Edelstahlleitung (7) mit dem Edelstahlrohr (1) und Hahn (5) mit der Anschlußstelle (10) und Hahn (6) mit einer Anschlußstelle (13) verbunden sind, besteht.

2. Vorrichtung nach Anspruch 1,
**dadurch gekennzeichnet,**
**daß** das Edelstahlrohr (1) einen Innendurchmesser von 1 bis 3 cm und eine Innenlänge von 5 bis 20 cm bei einem Küvettenvolumen (18) von 5 bis 140 cm³ aufweist.

3. Vorrichtung nach Anspruch 1 oder 2,
**dadurch gekennzeichnet,**
**daß** Dichtung (4) aus einem fluorierten Polymer besteht.

4. Vorrichtung nach mindestens einem der Ansprüche 1 bis 3,
**dadurch gekennzeichnet,**
**daß** Calciumfluoridscheibe (3) eine Dicke von 2 bis 10 mm und einen Durchmesser von 15 bis 50 mm aufweist.

5. Verwendung einer Vorrichtung nach den Ansprüchen 1 bis 4 für die Probenahme und die quantitative, IR-spektroskopische Bestimmung von Verunreinigungen in hygroskopischen Flüssigkeiten mit einer Reinheit von mehr als 99,95 Gew.-%.

6. Verwendung nach Anspruch 5 für die Probenahme und die quantitative, IR-spektroskopische Bestimmung von Verunreinigungen in Siliciumtetrachlorid mit einer Reinheit von mehr als 99,95 Gew.-%.

7. Verfahren für die Probenahme und die quantitative, IR-spektroskopische Bestimmung von Verunreinigungen in hygroskopischen Flüssigkeiten mit einer Reinheit von mehr als 99,95 Gew.-%,
**dadurch gekennzeichnet,**
**daß** man
- im ersten Schritt eine Vorrichtung nach mindestens einem der Ansprüche 1 bis 4 mit hochreiner Flüssigkeit füllt und die Hähne (5, 6) in Richtung der Leitungen (7, 8) schließt,
- im zweiten Schritt über Hahn (11), Anschlußstelle (10), Leitung (9), Anschlußstelle (13), Hahn (14) und Auslaß (15) trockenen Stickstoff (12) führt,
- im dritten Schritt nach Umstellen der Hähne (11, 14) aus dem Anlagenteil (16) hochreine Flüssigkeit über Leitung (9), Hahn (11) und Auslaß (17) leitet,
- im vierten Schritt nach Umstellen der Hähne (6, 5) den Küvettenraum (18) mit hochreiner Flüssigkeit (16) über die Hähne (14, 6) und die Leitungen (7, 8) in Richtung Auslaß (17) spült und
- im fünften Schritt nach Schließen der Hähne (5, 6) in Richtung der Leitungen (7, 8) die IR-spektroskopische Messung in an sich bekannter Weise durchführt.

8. Verfahren nach Anspruch 7,
**dadurch gekennzeichnet,**
**daß** nach der Durchführung des ersten Schritts und vor Durchführung des zweiten Schritts mindestens eine Zeit von 1 Stunde vergeht.

9. Verfahren nach Anspruch 7 oder 8,
**dadurch gekennzeichnet,**
**daß** man gemäß dem zweiten Schritt mindestens 0,1 Stunden mit trockenem Stickstoff spült.

10. Verfahren nach mindestens einem der Ansprüche 7 bis 9,
**dadurch gekennzeichnet,**
**daß** man gemäß dem viertem Schritt das Spülen des Küvettenraums (18) derart durchführt, daß mindestens ein 5facher Produktwechsel, bezogen auf das Volumen der Küvette, erfolgt.

11. Verfahren nach mindestens einem der Ansprüche 7 bis 10,
**dadurch gekennzeichnet,**
**daß** man nach Durchführung des vierten Schritts Hähne (5, 6) in Richtung der Leitungen (7, 8) schließt, Hähne (11, 14) umstellt, über Leitung (9) trockenen Stickstoff (12) in Richtung Auslaß (15) fährt, die Anschlußstellen (13, 10) trennt und nachfolgend die IR-spektroskopische Messung in an sich bekannter Weise durchführt.

## Claims

1. An apparatus for sampling and quantitative, IR-spectroscopic determination of impurities in a hygroscopic liquid having a purity of more than 99.95% by weight, **characterized in that** it comprises a stainless steel tube (1) having a straight bore at each end of which there is located a flange attachment (2) comprising two mutually parallel calcium fluoride plates (3) which are oriented perpendicular to the axis of the stainless steel tube and are each held in place by an annular outer flange (2a), the respective flange parts (2, 2a) being mechanically fixed to one another and at least one seal (4) being provided in each case between the flange parts (2, 2a) and the calcium fluoride plate (3), and two three-way taps (5, 6) which are connected to one another via a stainless steel line (9), tap (5) being connected to the stainless steel tube (1) via the stainless steel line (8) and tap (6) being connected to the stainless steel tube (1) via the stainless steel line (7) and tap (5) being connected to the connection point (10) and tap (6) being connected to a connection point (13).

2. An apparatus according to claim 1, **characterized in that** the stainless steel tube (1) has an internal diameter of from 1 to 3 cm and an internal length of from 5 to 20 cm, and the cell volume (18) is from 5 to 140 cm³.

3. An apparatus according to either of claims 1 and 2, **characterized in that** the seal (4) comprises a fluorinated polymer.

4. An apparatus according to at least one of claims 1 to 3, **characterized in that** the calcium fluoride plate (3) has a thickness of from 2 to 10 mm and a diameter of from 15 to 50 mm.

5. The use of an apparatus according to any one of claims 1 to 4 for the sampling and the quantitative, IR-spectroscopic determination of impurities in hygroscopic liquids having a purity of more than 99.95% by weight.

6. The use according to claim 5 for the sampling and the quantitative, IR-spectroscopic determination of impurities in silicon tetrachloride having a purity of more than 99.95% by weight.

7. A method of sampling and quantitative, IR-spectroscopic determination of impurities in a hygroscopic liquid having a purity of more than 99.95% by weight, **characterized in that**
- in a first step, an apparatus according to at least one of claims 1 to 4 is filled with high-purity liquid and the taps (5, 6) in the direction of the lines (7, 8) are closed,
- in a second step, dry nitrogen (12) is passed via tap (11), connection point (10), line (9), connection point (13), tap (14) and outlet (15),
- in a third step, after switching over the taps (11, 14), high-purity liquid from the plant section (16) is passed via line (9), tap (11) and outlet (17),
- in a fourth step, after switching over the taps (6, 5), the cell space (18) is purged with high-purity liquid (16) via the taps (14, 6) and the lines (7, 8) in the direction of the outlet (17) and
- in a fifth step, after closing the taps (5, 6) in the direction of the lines (7, 8), the IR-spectroscopic measurement is carried out in a manner known per se.

8. A method according to claim 7, **characterized in that** a time of at least 1 hour elapses after the first step has been carried out and before the second step is carried out.

9. A method according to either of claims 7 and 8, **characterized in that**, in the second step, purging with dry nitrogen is carried out for at least 0.1 hour.

10. A method according to at least one of claims 7 to 9, **characterized in that**, in the fourth step, the purging of the cell space (18) is carried out such that at least 5 product changes, based on the volume of the cell, occur.

11. A method according to at least one of claims 7 to 10, **characterized in that**, after carrying out the fourth step, taps (5, 6) are closed in the direction of the lines (7, 8), taps (11, 14) are switched over, dry nitrogen (12) is passed through the line (9) in the direction of the outlet (15), the connection points (13, 10) are disconnected and the IR-spectroscopic measurement is subsequently carried out in a manner known per se.

## Revendications

1. Dispositif de prise d'échantillon et d'identification quantitative par spectroscopie infrarouge d'impuretés dans des liquides hygroscopiques ayant une pureté supérieure à 99,95 % en poids,
**caractérisé par**
- un tube en acier inoxydable (1) avec un passage rectiligne, et dont les deux extrémités comportent chacune une bride (2),
- deux disques de fluorure de calcium (3) parallèles l'un à l'autre et orientés perpendiculairement à l'axe du tube en acier inoxydable et maintenus par respectivement une bride (2a), les brides (2, 2a) respectives étant fixées mécaniquement l'une à l'autre, avec au moins un élément d'étanchéité (4) respectivement prévu entre les brides (2, 2a) et le disque de fluorure de calcium (3),
- deux robinets à trois voies (5, 6) reliés entre eux par une conduite en acier inoxydable (9), le robinet (5) étant relié via une conduite en acier inoxydable (8) et le robinet (6) via une conduite en acier inoxydable (7) avec le tube en acier inoxydable (1), et le robinet (5) étant relié avec un point de raccordement (10) tandis que le robinet (6) est relié avec un point de raccordement (13).

2. Dispositif selon la revendication 1,
**caractérisé en ce que**
le tube en acier inoxydable (1) présente un diamètre intérieur de 1 à 3 cm et une longueur intérieure de 5 à 20 cm pour un volume de cuvette (18) de 5 à 140 cm³.

3. Dispositif selon la revendication 1 ou 2,
**caractérisé en ce que**
l'élément d'étanchéité (4) se compose d'un polymère fluoré.

4. Dispositif selon au moins l'une des revendications 1 à 3,
**caractérisé en ce que**
le disque de fluorure de calcium (3) présente une épaisseur de 2 à 10 mm et un diamètre de 15 à 50 mm.

5. Utilisation d'un dispositif selon les revendications 1 à 4, pour la prise d'échantillons et l'identification quantitative par spectroscopie infrarouge d'impuretés dans des liquides hygroscopiques ayant une pureté supérieure à 99,95 % en poids.

6. Utilisation selon la revendication 5, pour la prise d'échantillons et l'identification quantitative par spectroscopie infrarouge d'impuretés dans du tétrachlorure de silicium ayant une pureté supérieure à 99,95 % en poids.

7. Procédé de prise d'échantillons et d'identification quantitative par spectroscopie infrarouge d'impuretés dans des liquides hygroscopiques ayant une pureté supérieure à 99,95 % en poids,
**caractérisé en ce que**
- dans une première étape, on remplit un dispositif selon au moins l'une des revendications 1 à 4 avec un liquide de haute pureté et on ferme les robinets (5, 6) en direction des conduites (7, 8),
- dans une deuxième étape, on achemine de l'azote sec (12) via le robinet (11), le point de raccordement (10), la conduite (9), le point de raccordement (13), le robinet (14) et la sortie (15),
- dans une troisième étape, après commutation des robinets (11, 14), on achemine du liquide de haute pureté hors de la partie de stockage (16) via la conduite (9), le robinet (11) et la sortie (17),
- dans une quatrième étape, après commutation des robinets (6, 5), on purge l'espace de cuvette (18) avec du liquide de haute pureté (16) via les robinets (14, 6) et les conduites (7, 8) en direction de la sortie (17), et
- dans une cinquième étape, après la fermeture des robinets (5, 6) en direction des conduites (7, 8), on réalise la mesure par spectroscopie infrarouge d'une manière connue en soi.

8. Procédé selon la revendication 7,
**caractérisé en ce qu'**
après la mise en oeuvre de la première étape et avant la mise en oeuvre de la deuxième étape, il s'écoule au moins 1 heure.

9. Procédé selon la revendication 7 ou 8,
**caractérisé en ce que**
dans le cadre de la deuxième étape, la purge est réalisée pendant au moins 0,1 heure avec de l'azote sec.

10. Procédé selon au moins l'une des revendications 7 à 9,
**caractérisé en ce que**
dans le cadre de la quatrième étape, on effectue la purge de l'espace de cuvette (18) de telle sorte qu'au moins un cinquième du produit est remplacé par rapport au volume de la cuvette.

11. Procédé selon au moins l'une des revendications 7 à 10,
**caractérisé en ce qu'**
après la mise en oeuvre de la quatrième étape, on ferme les robinets (5, 6) en direction des conduites (7, 8), on commute les robinets (11, 14), on achemine de l'azote sec (12) via la conduite (9) en direction de la sortie (15), on sépare les points de raccordement (13, 10) et on réalise ensuite la mesure par spectroscopie infrarouge d'une manière connue en soi.
